# EUROPEAN PATENT SPECIFICATION

(11) **EP 2 890 253 B1**
(45) Date of publication and mention of the grant of the patent: **27.04.2016**
(21) Application number: 13736585.4
(22) Date of filing: 15.07.2013
(51) Int. Cl.: A23L 23/00, A23L 23/10, A23L 29/20

(54) **FOOD CONCENTRATE IN THE FORM OF A GEL AND PROCESS TO PREPARE THE SAME**
LEBENSMITTELKONZENTRAT IN FORM EINES GELS UND VERFAHREN ZUR HERSTELLUNG DAVON
CONCENTRÉ ALIMENTAIRE SOUS FORME DE PRODUIT SE PRÉSENTANT COMME UN GEL ET PROCÉDÉ POUR SA PRÉPARATION

(30) Priority: 30.08.2012 EP 12182371
(43) Date of publication of application: 08.07.2015
(73) Proprietor: Unilever N.V., 3013 AL Rotterdam (NL); Unilever PLC, London, Greater London EC4Y 0DY (GB)
(72) Inventor: MELLEMA, Michel, NL-3133 AT Vlaardingen (NL); POPP, Alois, Konrad, NL-3133 AT Vlaardingen (NL)
(74) Representative: Tjon, Hon Kong Guno
(86) International application number: PCT/EP2013/064873
(87) International publication number: WO 2014/032845

(56) References cited:
- WO-A1-2007/068332
- WO-A1-2007/068402

## Description

The present invention relates to a packaged food concentrate in the form of a gel and a process to prepare the same. It further relates to the use for preparing a bouillon, soup, sauce, or seasoned dish.

### Background of the invention

Savoury food concentrates in the form of a gel have been described, for example in WO2007/068402 An advantage over food concentrates which are dry, like traditional bouillon cubes, is their fresh appearance. Liquid high-salt food concentrates have the disadvantage that any possible particulate material may sediment, which is not desired. Furthermore, spillage of a liquid food concentrate easily occurs.

The gel format contains a significant amount of water, a gelling agent which provides the required solid gel texture, and a significant amount of salt, even a salt level up to its saturation level, or higher, may be desired. The relatively high salt level is required to allow dilution of the food concentrate in high volumes of an aqueous solution, while still providing the taste impact in the resulting ready-to-eat food product. Indeed, the food concentrate itself is normally not suitable to be eaten as such, because of the high salt level.

A disadvantage often observed for high-salt food concentrates in the form of a gel is that they have the tendency to show syneresis. Syneresis is a natural phenomenon that water is not kept in the gel over time, but to some extent separates from the gel. Syneresis is known to increase with increasing salt levels in a gel. Therefore, syneresis is especially prominent in savoury food concentrate gels with their inherent high salt levels. As a result of syneresis, the gel shrinks and a layer of water can be formed in the packaging around the food concentrate, or sometimes the food concentrate even swims in the water, which is not desired.

Accordingly, there is a need for a packaged food concentrate in the form of a gel, wherein the amount of syneresis water around the food concentrate is reduced or preferably is absent upon storage. There is a need for a process to produce a food concentrate in the form of a gel which process is fast and efficient, wherein the food concentrate shows a reduction in syneresis upon storage.

### Summary of the invention

Surprisingly, and counter-intuitively, this problem could be overcome by a packaged food concentrate comprising a gel and a layer, wherein the layer comprises more than 26.5 wt% of total salt (based on the weight of the water content of the layer, and calculated as ((weight of salt in the layer)/(weight of salt in the layer + weight of water in the layer))*100%, and which layer is in contact with the gel and wherein the layer is located below the gel.

In a further aspect, the present invention relates to a process to prepare a packaged food concentrate according to any one of the preceding claims, the process comprising the steps of:
i. Providing a packaging,
ii. Adding salt to the packaging,
iii. Adding to the packaging a gel or a non-solidified ingredient mixture for a gel,
iv. If required, solidifying said ingredient mixture,
to result in a packaged food concentrate comprising a gel and a layer.

### Detailed description of the invention

### Gel

The present invention relates to a packaged food concentrate. The food concentrate of the present invention is in the form of a solid gel and a layer. This is the texture at 20°C, as the skilled person will understand. Solid means not liquid. The gel can not be poured from its packaging, but can be removed as one piece, which maintains its shape, it is a self-sustaining gel at RT. Indeed, a solid gel would not have a viscosity, which can be measured with for example a Brookfield viscosimeter, as the texture of the solid gel would break during measurement. This should be understood, as that the gel can deform under pressure or gravity to some extend, depending on how strong the gel is, but that the gel contains elasticity which brings it back in the original shape after removal of the pressure. The gel therefore preferably is an elastic gel. The gel might be a brittle gel, for example when agar-agar is used as a gelling agent. In case of a brittle gel, the gel has a breaking point. A breaking point can be analysed by a person skilled in the art.

The elastic modulus G' of the gel is preferably higher than 30 Pa, more preferably higher than 50 Pa, more preferably higher than 80 Pa. It is preferably lower than 50000 Pa, more preferably lower than 10000 Pa, even more preferably lower than 5000 Pa, more preferably lower than 1000 Pa, more preferably lower than 500 Pa, more preferably lower than 350 Pa. The viscous modulus G" is preferably higher than 1 Pa, more preferably higher than 5 Pa, more preferably higher than 10 Pa.

The ratio of the elastic modulus to the viscous modulus G'/G" is preferably higher than 1, more preferably higher than 2, even more preferably higher than 5. It is preferably lower than 1000, preferably lower than 200, even more preferably lower than 100, most preferably lower than 50. Elastic and viscous moduli are terms known in the art of rheology. They have been described for example in "Das Rheologie Handbuch, Thomas Mezger, Curt R. Vincentz-Verlag, Hannover, 2000".

The protocol for measuring the elastic and viscous modulus is as following:
- A state of the art rheometer such as the AR G2 (TA Instruments, New Castle, Delaware, USA) or Physica MCR 300 (Anton Paar GmbH, Graz, Austria) are suitable for this measurement;
- Parallel plates geometry, preferred plates with sandblasted surface
- Profile: Temperature sweep followed by time sweep test:
   a. Load the sample at 90-95 °C
   b. Cool from loading temperature to 20 ºC at a rate of 5°C/min while measuring the Storage modulus (G') and Loss Modulus (G") at a strain of within the linear visco-elastic region (pre-determined by a strain sweep test as shown in 'Das Rheologie Handbuch') and a frequency of 1 Hz
   c. Keep at 20 °C for 10 minutes while measuring G' and G" at the same strain and frequency conditions as during the cooling step b) (time sweep step);
   d. After 10 min, the values for the storage modulus (G') and the viscous modulus (G") reach a plateau (i.e. they do not grow substantially further) and are taken as elastic modulus and viscous modulus of the gel. If plateau values for G' and G" are not reached after 10 min, allow more time for step c (for example, 20 min).

Brittle gels can be analysed in a texture analyser, as known in the art, for example to determine the breaking point.

### Water

The gel contains water. The amount is preferably of from 30 wt% to 80 wt%, more preferably of from 40 wt% to 60 wt%, based on total weight of the gel

The water activity of the gel is preferably of between 0.6 and 0.85, more preferably of between 0.7 and 0.8.

### Salt

The gel, i.e. without the layer comprising salt, preferably comprises from 10 wt% to 40 wt% of salt, based on the water content of the gel. The salt preferably comprises NaCl. The high level of salt is predominantly present to provide the desired taste impact after dissolution in a relatively high volume. As common in the art, the salt content, preferably NaCl, in this context is calculated as ((amount of salt)/(amount of salt + amount of water))*100%. At a level of higher than 26.5 wt% on water, NaCl starts to crystallise, and the gel might contain some salt crystals. Preferably, the amount of salt in the gel is from 15 wt% to 35 wt%, even more preferably from 20 wt% to 31 wt%, most preferably of from 20 wt% to 26.5 wt%, based on the weight of the total water content of the gel. The amount of NaCl in the gel is preferably of from 10 wt% to 40 wt%, more preferably of from 10 wt% to 35 wt%, more preferably form 15 wt% to 35 wt%, more preferably of from 20 wt% to 31 wt%, even more preferably of from 20 wt% to 26.5 wt% on the weight of the total water content of the gel. The salt in the gel is preferably dissolved.

It could be preferred that the total amount of salt contained in the food concentrate (gel + layer) is from 15 wt% to 80 wt%, based on the weight of the total water content of the food concentrate (gel + layer), and calculated as ((weight of salt)/(weight of salt + weight of water))*100%. It could be more preferred that the total amount of salt contained in the food concentrate (gel + layer) is from 15 wt% to 75%, even more preferred 15 wt% to 55 wt%, based on the weight of the total water content of the food concentrate (gel + layer). The amount of NaCl in the food concentrate is preferably from 15 wt% to 80 wt%, more preferably of from 15 wt% to 65 wt%, more preferably from 15 wt% to 55 wt%. This could preferably result in a situation wherein the gel comprises salt, preferably wherein the gel comprises NaCl, in an amount of up to 30 wt% on total water content (i.e. in gel + layer) ((amount of salt in the gel)/(amount of salt in the gel + amount of total water in the food concentrate)) and that the layer which is in contact with the gel comprises up to 75 wt% of salt on total water content, i.e. ((amount of salt in the layer)/(amount of salt in the layer + amount of total water in the food concentrate)).

### Gelling system

The gel of the food concentrate of the invention preferably contains a gelling system in an effective amount. Effective amount should be understood as common in the art, i.e. an amount sufficient to provide a solid gel, i.e. self- supporting at RT. The effective amount may depend on the type of gelling system which is chosen and is known to the skilled person or can be easily determined.

Preferably, the gelling system comprises, more preferably is a gelling system selected from the group consisting of gelatinised modified starch, gelatine combined with gelatinised starch, xanthan gum combined with a glucomannan, xanthan gum combined with a galactomannan, xanthan gum combined with carrageenan, carrageenan, agar-agar, and mixtures thereof. These gelling systems proved advantageous in the context of the present invention, for example as these gelling systems can provide a shape stable gel in the context of this invention.
Gelling systems may comprise one or more polysaccharide gums. The total amount of polysaccharide gums taken together is preferably between 0.1 wt% and 10 wt%, based on the water content of the gel, more preferably, the amount is from 0.2 to 6 wt%, even more preferably of from 0.3 to 3 wt%, as based on the water content of the gel.

Preferably, the gelling system comprises more than 50 wt%, preferably more than 75 wt%, more preferably more than 90 wt%, most preferably more than 95 wt% (based on the weight of the gelling system) of one of the group of gelling systems consisting of modified starch, gelatine combined with starch, carrageenan, xanthan combined with a carrageenan, xanthan gum combined with a glucomannan, xanthan gum combined with a galactomannan and agar-agar. Most preferably, the gelling system comprises more than 50 wt%, preferably more than 75 wt%, more preferably more than 90 wt%, most preferably more than 95 wt% (based on the weight of the gelling system) of a gelling system consisting of xanthan gum combined with a galactomannan.
If the gelling system comprises or is modified starch, it is present in an activated form, i.e. in the gelatinised form. Modified starch is preferably present in an amount of from 10 wt% to 30 wt% (weight % based on water content of the gel).
If the gelling system comprises, more preferably, is xanthan gum combined with a glucomannan, like konjac mannan, the amount of xanthan gum is preferably present in an amount of from 0.1 wt% to 2wt%, preferably in an amount of from 0.4 wt% to 1.8 wt%, even more preferably of from 0.6 wt% to 1.5 wt%, most preferably of from 0.6 wt% to 1 wt% (weight % based on the water content of the gel). The glucomannan is preferably present in an amount of from 0.5 wt% to 4 wt%, more preferably of from 0.6 wt% to 2 wt%%, even more preferably of from 0.6 wt% to 1.5%, most preferably of from 0.6 wt% to 1 wt% (weight % based on water content of the gel).

If the gelling system comprises, more preferably, is a combination of gelatine and (gelatinised) starch, gelatine is preferably present in an amount of from 1.5 wt % to 30 wt%, more preferably in an amount of from 6 wt% to 20 wt%, even more preferably of from 12 wt% to 20 wt%, based on the water content of the gel. The starch is preferably present in an amount of from 0.1 wt%to 10 wt%, more preferably from 1 wt % to 7 wt%, most preferably of from 3 wt% to 6 wt%, based on the water content of the gel. Starch is present in the activated, i.e. gelatinised form.
If the gelling system comprises, more preferably, is xanthan gum combined with a galactomannan, preferably, the combination of xanthan gum with galactomannan is present in an amount of from 0.1 wt% to 10 wt%, preferably in an amount of from 0.2 wt% to 7 wt%, more preferably in an amount of from 0.5 wt% to 5 wt%, most preferably in an amount of from 0.8 wt% to 3 wt%, based on the weight of the water content of the gel.
Optimal results were observed for the combination of xanthan gum with galactomannan , when the gelling system comprises xanthan gum combined with anyone of the group consisting of locust bean gum, guar gum and mixtures thereof. Most preferably, the gelling system comprises the combination of xanthan gum and locust bean gum. This combination of xanthan gum with galactomannan, preferably with locust bean gum, is preferably present in an amount of from 0.1 wt% to 10 wt%, preferably in an amount of from 0.2 wt% to 7 wt%, more preferably in an amount of from 0.5 wt% to 5 wt%, most preferably in an amount of from 0.8 wt% to 3 wt, based on the weight of the water content of the gel.

Preferably, the present invention relates to a packaged food concentrate according to the invention, wherein the gel comprises:
- from 10 wt% to 40 wt% of salt, wt% based on the weight of the water content of the gel and calculated as ((weight of salt)/(weight of salt + weight of total water content of the gel))*100%,
- from 30 to 80 wt% of water,
- an effective amount of a gelling system.

### Savoury taste enhancer

The food concentrate is preferably a savoury food concentrate, for example for preparing a bouillon, a soup, a sauce, a gravy or a seasoned dish. To contribute to the savoury character, the concentrate food composition of the present invention may further comprise a savoury taste enhancer selected from the group consisting of monosodium glutamate (MSG), 5'-ribonucleotides, organic acid and mixtures thereof. Savoury taste enhancer is preferably present in a total amount of less than 30 wt%, more preferably of between 0.1 wt% and 30 wt%, preferably in an amount of from 1 wt% to 25 wt%, most preferably in an amount of from 5 wt% to15 wt%, based on the weight of the total food concentrate. An individual taste enhancer as mentioned above may be present in an amount of less than 30 wt%, more preferably of between 0.1 wt% and 30 wt%, preferably in an amount of from 1 wt% to 25 wt%, most preferably in an amount of from 5 wt% to 15 wt%, based on the weight of the total food concentrate.

### Taste imparting components

In the food concentrate according to the invention, it is preferred that taste-imparting components are present. They may comprise one or more of yeast extract; hydrolyzed proteins of vegetables-, soy-, fish-, or meat-origin; liquid or dissolvable extracts or concentrates selected from the group consisting of meat, fish, crustaceans, herbs, fruit, vegetable and mixtures thereof; particles of meat; particles of fish; particles of crustaceans; particles of plant (e.g. herbs, vegetable, fruit); particles of fungi (e.g. mushroom); flavours and mixtures thereof. In the above, where it says "meat" this is preferably to be understood to comprise beef, pork, lamb or chicken (and other fowl). Preferably the plant pieces comprise pieces selected from the group consisting of onion, garlic, leek, carrot, parsley, tomato and mixtures thereof. Preferably the amount of taste-imparting components as set out above is from 0 wt% to 60 wt% (by weight on the total concentrate). More preferred from 1 wt% to 60 wt%, even more preferably from 5 wt% to 40%, based on the weight of the total food concentrate (layer + gel).
Preferably, the amount of particles, preferably particles selected from the group consisting of particles of meat, particles of fish, particles of crustaceans, particles of plant (e.g. herbs, vegetable, fruit), particle of fungi (e.g. mushroom) and mixtures thereof is from 0 wt% to 60 wt%, more preferably from 0.5 wt% to 60 wt%, more preferably from 1 wt% to 60 wt%, even more preferably from 2 wt% to 40 wt% (wet weight on the weight of the total concentrate). The amount of particles can be of from 0.5 wt% to 30 wt%, more preferably of from 1 to 25 wt%, even more preferably of from 2 wt% to 20 wt% (wet weight based on the weight of the food concentrate). It can be preferred that particles are present in an amount of 0 wt% to 1 wt%, preferably of from 0 wt% to 0.5 wt%, more preferably of from 0 wt% to 0.1 wt%, or that no particles are added during production of the food concentrate, or that no particles are present in the food concentrate. The wet weight is defined as the weight in a swollen state. It can be determined for example by heating up the food concentrate in water, and equilibrate the particles. The wet weight of the particles is compared with the original total weight of the food concentrate ((wet weight particles/total weight of the food concentrate))*100%.
The food concentrate of the present invention preferably comprises flavours. Flavours can be present for example in an amount of for example 0.1 to 10 wt%, more preferably of from 0.5 to 8 wt%, even more preferably of from 1 to 6 wt%, based on the weight of the total food concentrate. The flavours are preferably selected from the group consisting of vegetable flavour, chicken flavour, fish flavour, beef flavour, pork flavour, lamb flavour, meat flavour, yeast extract and mixtures thereof.

### Fat

Fat may be present in the food concentrate according to the invention in relatively low amounts. Fat can be liquid fat or solid fat, at ambient temperature, such as for example at 20°C. Preferably, a fat is one of the fats selected from the group consisting of chicken fat, pork fat, beef fat, and mixtures thereof. It can preferably be a fat selected from the group consisting of palm oil, sunflower oil, olive oil, rape seed oil and mixtures thereof. It can be a vegetable fat or an animal fat. Higher amounts are preferably prevented as they may interfere with the proper texture of the gel or may result in phase separation during storage or transport. Relatively high amounts of fat may have a negative effect on the texture or appearance of the gel.. Hence, preferably, the present invention relates to a food concentrate further comprising less than 30 wt%, more preferably less than 20 wt% of fat, even more preferably less than 16 wt% of fat, even more preferably less than 10 wt% of fat, based on the weight of the total food concentrate. Fat may be present in an amount of from 0.5 wt% to 30 wt%, more preferably of from 1 wt% to 15wt%, most preferably of from 3 wt% to 10 wt%, based on the weight of the total food concentrate. It can be preferred that fat is absent.

The concentrate food concentrate of the invention is preferably a savoury food concentrate. Consequently, after dilution, the resulting product does preferably taste not sweet. The sugar content in the food concentrate according to the invention is preferably lower than 50 wt%, more preferably lower than 40 wt%, even more preferably lower than 30 wt%, more preferably lower than 15 wt%, most preferably lower and 10 wt%, based on the weight of the total food concentrate. It can be more than 1%, preferably more than 5 wt% based on the total weight of the concentrate. A suitable range could be of between 1 and 20 wt%, preferably of from 3 to 15 wt% based on the total weight of the concentrate. It may be preferred that the composition is free from sugar or free from any added sugar.

### Weight

The amount of syneresis may be influenced by the weight of the food concentrate. It is preferred that the cooking aid has a weight of between 10 g and 1 kg, preferably of between 15 g and 500 g. For unit-dosing formats, i.e. suitable for single use, the weight can preferably of between 10 g and 50 g, more preferably of between 15 g and 40 g. For multi-dosing formats, the weight may preferably of between 50 g and 1 kg, more preferably of between 100 g and 500g, most preferably of between 150 g and 350 g.

The shape of the cooking aid is preferably regular. The shape may be for example a sphere, a pyramid, a cylinder, an oval cylinder, a truncated cone, a cube or an oblong. To minimize syneresis, when present in the packaging, preferably the height is equal or shorter than the length. Height is defined as the longest dimension perpendicular to the bottom of the packaging. Length is defined as the longest dimension perpendicular to the height and parallel to the bottom of the packaging.

### The layer

Besides a gel, the food concentrate of the invention comprises a layer which comprises salt. Salt is known to induce syneresis in gels, resulting in water being expelled from the gel and collecting on or around the gel. In addition, salt is known to extract water from water-containing materials. Counter-intuitively, it was observed that when a layer comprising salt is present in contact with the gel, the level of syneresis is significantly lower than in absence of such a layer.

The total salt in the layer is preferably homogenously distributed in the layer. The layer comprising salt preferably constitutes from 2 wt% to 49 wt%, preferably 2.5 wt% to 40 wt%, more preferably 3 wt% to 25% of the food concentrate (gel + layer). The layer is preferably located on the bottom of the packaging, wherein the bottom is defined in its normal meaning, i.e. normally as the side of the packaging that is not in contact with the headspace in the packaged product and is normally located most under, when positioned in its conventional, intended position. In this way, the layer is located below the gel. This surprisingly resulted in optimal syneresis reduction. The layer can preferably be separated easily by the person skilled in the art, e.g. by scraping or wiping it from the gel using for example a spatula, a spoon or a knife.

The amount of total salt present in the layer is at least 26.5%wt., preferably at least 30 wt%, more preferably, at least 50 wt%., based on the weight of the water content of the layer. Total salt in this respect includes both dissolved salt and crystalline salt. The amount of total salt is preferably less than 100 wt%, more preferably less than 95 wt%, even more preferably less than 90 wt%, based on the weight of the water content of the layer. It could be preferred that the layer comprises from 50 wt% to 100 wt% of total salt, or 50 wt% to 90 wt%, based on the weight of the water content of the layer, and calculated as ((weight of salt in the layer)/(weight of salt in the layer+ weight of water in the layer))*100%.

The layer preferably comprises from 51 wt% to 100 wt%, more preferred 80 wt% to100 wt%, even more preferred of from 85 wt% to 90 wt% of salt, based on the dry weight of the layer.

The salt in the layer preferably comprises NaCl. NaCl is preferably present in an amount of from 51 wt% to 100 wt%, preferably of from 75 wt% to 95wt%, more preferably of from 80 wt% to 90 wt%, based on the dry weight of the layer. The layer can comprise KCl, if desired, preferably in addition to NaCl.

In addition to salt, the layer may comprise plant material, such as solid plant particles, for example herbs or spices or mixtures thereof. This vegetable material is preferably in the form of particles, for example pieces of leaves. The amount of plant material is preferably less than 49 wt%, more preferably of from 0.5 wt% to 40 wt%, more preferably of from 1 wt% to 10 wt%, based on the wet weight of the layer. The wet weight is defined as the weight in a swollen state in a NaCl-saturated water solution. It can be determined for example by separating the plant material from the layer and allowing it to equilibrate in a saturated NaCl solution. The wet weight of the plant material is calculated as ((wet weight of the plant material / (wet weight of the plant material + weight of the layer without plant material))*100%. Preferably, the plant material is dehydrated when it is added to the layer during preparation of the food concentrate, preferably during step ii) of the process of the invention.

The layer may further comprise water. The water content of the layer is preferably less than 50 wt%, based on the weight of the layer. It is preferably between 0 wt% and 50 wt%, more preferably of between 2 wt% and 40 wt%, most preferably between 2 wt% and 30% and can for example be between 5 wt% and 50 wt%, based on the weight of the layer. The amount of water in the layer is normally not too high, as this may render the layer liquid, which is not desired.

The texture of the layer is preferably solid or pasty at room temperature. Preferably, the texture of the layer is solid or pasty, preferably solid, at the moment of preparation of the food concentrate (process step ii). The layer is preferably not a gel. The layer is preferably not wet at moment of preparation of the food concentrate. At the moment of preparation, the upper surface of the layer can become wet by the non-solidified ingredient mixture for the gel, while the bottom surface of the layer (i.e. the surface in contact with the bottom of the container of the food concentrate) can remain dry. As such, it is possible that during preparation part of the non-solidified ingredient mixture penetrates into the layer. Especially in such a situation, the layer can be identified for example by the amount of salt, which preferably comprises undissolved salt, and which is typically much higher in the layer than in the gel. For example, the food concentrate can be sliced in small radial slices (e.g. 0.3 mm) and the amount of salt present in each slice measured by e.g. element analysis, as known in the art. Accordingly, the top and bottom slice are assigned to the gel and to the layer phase, respectively. The slices with a similar salt content as the top slice are assigned to the gel phase, the ones with a similar salt content as the bottom slice, are assigned to the layer phase. It is preferred that the layer is not too thick. The average thickness of the layer is preferably less than 20 mm, preferably less than 10 mm, more preferably less than 7.5 mm, most preferably less than 6 mm. The average thickness can be higher than 0.3 mm, preferably higher than 0.5 mm, preferably higher than 3 mm. It can be for example higher than 0.3 mm, preferably higher than 0.5 mm, and lower than 20 mm. This average thickness is in particular relevant for food concentrates in a single-dosing format. The layer preferably covers at least part of a surface of the gel, preferably the lower surface of the gel. The layer preferably covers the surface, preferably the lower surface, in a homogenous way. In this way no uncovered areas are present at the covered surface of the gel and preferably the distribution of salt in the layer is homogenous. Preferably, the layer has a volume of from 2 % to 49 %, more preferably of from 2 % to 25 % of the volume of the food concentrate.

The Aw of the layer is preferably of from 0.5 to 0.75, preferably of from 0.55 to 0.75.

The reduction of syneresis, wherein syneresis is expressed as water on or around the food concentrate, is preferably of more than 5%, preferably more than 10%, more preferably more than 20%, compared to a similar food concentrate wherein no layer is present and which has the same salt level in the gel. The reduction of syneresis may be between 80% and 5%, preferably between 70% and 10%, most preferably between 20% and 60%. The amount of syneresis liquid present in the packaging, i.e. apart from any water present in the gel and in the layer, may vary depending on the gelling system which is used. For calculating the amount of syneresis, syneresis is preferably measured after at least 2 weeks of storage at RT. For example, especially when a gelling system based on xanthan and locust bean gum is used, after 2 weeks of storage at RT the amount of syneresis liquid is preferably lower than 10%, based on the weight of the gel, and may be for example between 0% and 2%, or between 0.5% and 1.5% based on the weight of the gel. The total syneresis is calculated as ((syneresis liquid in packaging (if any) + syneresis liquid sticking to surface of the gel) / (final weight of the gel)) x 100%.

The food concentrate is packaged in a packaging. The packaging is preferably a tub, a cup, a jar, a sachet or a stick-pack, preferably a tub or a jar. These packagings are well known in the art. The packagings preferably are made from plastic.

### Process

In a further aspect the present invention relates to a process to prepare a packaged food concentrate according to the invention. In a first step (i) a packaging is provided. This packaging is preferably a tub or cup, as indicated above.

In step (ii), salt is added to the packaging. This is preferably done by bringing salt in particulate, crystalline form on the bottom of the packaging. Step ii) is preferably carried out after step i). The amount of salt added to the packaging is preferably of between 2 wt% and 49 wt%, more preferably of from 2.5 wt% to 40 wt%, more preferably of between 3 wt% and 25 wt%, based on the weight of the resulting food concentrate (weight of salt) / (weight of resulting food concentrate including the layer) *100%. Salt is preferably added in an amount of from 51 wt% to 100 wt%, preferably of from 80 wt% to100 wt%, even more preferably of from 85 wt% to 90 wt%, based on the dry weight of the layer.

In step iii), a gel or a non-solidified ingredient mixture for a gel is added to the packaging, preferably a non-solidified ingredient mixture for a gel. Besides water, salt, and a gelling system, the gel may comprise for example taste enhancer like monosodium glutamate, 5'-ribonucleotides, organic acids or mixtures thereof, or taste imparting components, as described above. The gel is prepared as known in the art. Normally, an ingredient mixture is prepared comprising water and gelling system. The amounts of water, salt, gelling system taste enhancer, taste imparting ingredients, as preferably present in the food concentrate have been indicated above where the food concentrate has been described, and apply for the preparation of the gel as well. For example, water can be present in the gel or in the non-solidified ingredient mixture for a gel in an amount of from 30 wt% to 80 wt%. As known in the art, most gelling systems comprising gums, like for example xanthan gum or galactomannans, require an activation step by heating, e.g. above the activation temperature of the gelling system which is used. The gel is added to the packaging as a solid gel or, preferably, as a liquid or pasty (i.e. non-solidified) ingredient mixture, i.e. to form a solid gel after solidification of the ingredient mixture.

In case such a non-solidified ingredient mixture is added to the packaging, the mixture is solidified in step iv). Preferably, the solidification step comprises cooling or allowing to cool. Cooling is preferably carried out to a temperature which is lower than the gellification temperature of the gelling system present in the ingredient mixture to form the gel. Cooling is preferably carried out to a temperature of the food concentrate of from 5 °C to 30 °C, preferably of from 10 °C to 25°C.
After step iv), the process preferably comprises the step of closing the packaging. Closing preferably comprises applying a seal or a lid to the packaging. The seal or lid comprises preferably plastic or metal, like for example aluminium.

In a further aspect, the present invention relates to a food concentrate comprising a gel and a layer, wherein the food concentrate is obtainable by, preferably obtained by the process of the present invention.

### Use

The present invention further relates to the use of a packaging comprising a food concentrate according to the invention for preparing a bouillon, a soup, a sauce or a seasoned dish. To this end, the food concentrate is normally removed from the packaging and added to an aqueous liquid, e.g. water. The food concentrate is preferably dissolved in the aqueous liquid, wherein the aqueous liquid preferably has a temperature of between 65 °C and 100 °C, preferably between 70 °C and 95 °C.

### Advantages

It was found that by the present invention the amount of syneresis water around the food concentrate could be reduced. This highly improved the appearance of a packaged gelled food concentrate when a gelling system is used which shows syneresis e.g. in the presence of the relatively high salt levels as are common in concentrate food products to prepare bouillons, soups and sauces. It was further observed that the problem of rejellification, i.e. the process of gel formation after dissolution of the cooking aid in water or a dish could be reduced as well. This was best observed after cooling of the dish resulting from dilution of the food concentrate in water to e.g. room temperature or fridge temperature.

The present invention will now be exemplified by the following, non-limiting examples:

### Examples

### Example 1:

| Recipe: Gel of Xanthan and LBG | |
|---|---|
| Ingredient | Amount [g] |
| Xanthan gum | 1.0 |
| Locust bean gum | 1.0 |
| Salt (NaCl) | 48 |
| Water | 150 |
| Total | 200 g |

### Process description: Gel preparation

1. Xanthan gum and locust bean gum were mixed in a glass beaker or jar with the water, placed in a water bath with temperature control combined with a heater and magnetic stirrer plate.
2. Gums were dispersed by hard stirring (by e.g. magnetic lab mixer Mettler-Toledo).
3. The resulting mixture was heated to 95°C under hard stirring.
4. Salt was added under hard stirring.
5. When a homogeneous solution was obtained, the mixture was combined with the layer.

### Process description: Preparation of food concentrate (gel/layer combinations)

Layer positioned on the bottom of the package (plastic tub), below the gel.
1. 5.6 g of common salt was placed on the bottom of a cylindrical plastic tub of diameter 3.3 cm to form a layer,
2. 25 g of gel solution was added on top of the layer,
3. The package is sealed and placed into the fridge at 6°C for 12 h in order to induce gellification,
4. The package was stored at ambient temperature (about 20 °C) for 2 weeks.

Layer positioned on the top of the gel, (comparative example).
1. 25 g of gel solution was poured into a package (cylindrical plastic tub of diameter 3.3 cm),
2. 5.6 g of common salt was carefully placed on top of the gel solution,
3. The package was sealed and placed into the fridge at 6°C for 12 h in order to induce gellification,
4. The package was stored at ambient temperature (about 20°C) for 2 weeks.

Salt mixed into the gel, (comparative example).
1. 25 g gel solution was added to a package (cylindrical plastic tub of diameter 3.3 cm),
2. 5.6 g of salt was added to the gel solution,
3. The mixture of gel solution and added salt was mixed with a spoon until the salt was homogeneously distributed in the gel solution,
4. The package was sealed and placed into the fridge at 6°C for 12 h in order to induce gellification,
5. The package was stored at ambient temperature (about 20°C) for 2 weeks.

No salt layer added, (comparative example).
1. 25 g gel solution was added to the package (cylindrical plastic tub of diameter 3.3 cm),
2. The package was sealed and placed into the fridge at 6°C for 12 h in order to induce gellification,
3. The package was stored at ambient temperature (about 20°C) for 2 weeks.

Salt placed on top of the solidified gel, (comparative example).
1. 25 g gel solution is added to the package(cylindrical plastic tub of diameter 3.3 cm),
2. The package is sealed and placed into the fridge at 6°C for 12 h in order to induce gellification
3. 5.6 g salt is added on top of the solidified gel
4. The package was stored at ambient temperature (about 20°C) for 2 weeks.

### Syneresis measurements

Syneresis was measured of the experiments applying the following method.
1. The plastic containers were opened and the gels including the salt layer, when present, were carefully removed with a spoon. In case syneresis liquid was present, as much as possible syneresis liquid was kept in the container.
2. Two dry tissues (e.g. Kleenex) were weighed on a balance (e.g. Mettler- Toledo, precision +- 0.02 g).
3. All syneresis liquid which remained in the container was removed with the first tissue. The first tissue was weighed again. The difference between dry and wet weight of the tissue was defined as being the syneresis liquid present in the tub
4. The gel was then separated from the layer, when present, using a knife.
5. The gel was carefully covered by the second tissue.
6. The second tissue was weighed. The difference between dry and wet weight of the tissue was defined as being the syneresis liquid present on the gel.
7. Both the amount of the syneresis liquid present in the tub and of the syneresis liquid present on the gel were added, indicating the total syneresis. The total syneresis is calculated as (syneresis tub + syneresis gel) / (initial weight of the gel without the added salt layer) x 100%. In experiments 1C and 3C the "initial weight of the gel" was taken without the additionally mixed in salt.
8. Alternatively, the syneresis can be calculated after the incubation period, based on the gel weight after separation from the layer.

Results:

| 1.3 wt.% xanthan/LBG (wt% based on the water content) | Syneresis Gel [g] | Syneresis Tub [g] | Total syneresis [%] |
|---|---|---|---|
| 1A. salt on bottom | 0.15 | 0.13 | 1.1 |
| 1B. salt on top (comp. ex.) | 0.6 | 0.44 | 4.2 |
| 1C. salt mixed in (comp. ex.) | 0.5 | 0.40 | 3.6 |
| 1D. no salt added (comp. ex.) | 0.36 | 0.22 | 2.3 |
| 1E. salt added on top of gelled gel (comp. ex.) | 0.5 | 0.41 | 3.6 |

A reduction in syneresis was observed when a layer comprising salt according to the invention was used on the bottom of the packaging (1 A), compared to the situation when no layer was present (1 D). When the amount of salt as used for the layer was mixed in the gel an increase in syneresis was observed (1 C), when compared to the situation without a layer (1D). Addition of salt on top of the gel when this was not solidified yet (1 B) or was solidified (1E) resulted in an increase in syneresis as well, compared to the situation when no layer was present (1 D). The total syneresis levels represent the amount of syneresis measured based on the initial weight of the gel without the added salt layer.

### Example 2:

Recipe: Gel of xanthan gum and i-carrageenan

| Ingredient | Amount [g] |
|---|---|
| Xanthan | 1.0 |
| i-carrageenan | 1.0 |
| Salt (NaCl) | 48 |
| Water | 150 |
| Total | 200 g |

The compositions were prepared according to the method of Example 1, but with 30 g gel solution and 5,6 g salt added into the package.

Results:

| 1.3 % xanthan gum/i-carrageenan (wt% based on the water content) | Syneresis Gel [g] | Syneresis Tub [g] | Total syneresis [%] |
|---|---|---|---|
| 2A. salt on bottom | 0.90 | 0.03 | 3.1 |
| 2B. salt on top (comp. ex) | 1.16 | 0.65 | 6.0 |
| 2C. no salt added (comp. ex) | 1.56 | 0.00 | 5.1 |
| 2D. salt added on top of gelled gel (comp. ex) | 1.44 | 0.65 | 7.0 |

A reduction in syneresis was observed when a layer comprising salt according to the invention was used on the bottom of the packaging (2A), compared to the situation when no layer was present (2C) or when salt was added on top of the gel before (2B) or after (2D) solidification of the gel. The total syneresis levels represent the amount of syneresis measured based on the initial weight of the gel without the added salt layer.

### Example 3: Recipe: Gel of agar-agar

| Ingredient | Amount [g] |
|---|---|
| Agar-agar | 2.0 |
| Salt (NaCl) | 48 |
| Water | 150 |
| Total | 200 g |

The compositions were prepared according to the method of Example 1, but with 30g gel solution and 5.6 salt added into the package.

Results:

| 1.3wt% agar-agar (wt% based on the water content) | Syneresis Gel [g] | Syneresis Tub [g] | Total syneresis [%] |
|---|---|---|---|
| 3A. salt on bottom | 0.33 | 0.27 | 2.0 |
| 3B. salt on top | 0.41 | 0.61 | 3.4 |
| 3C. salt mixed in (comp. ex) | 0.44 | 0.64 | 3.7 |
| 3D. no salt added (comp. ex) | 0.39 | 0.83 | 4.1 |
| 3E. salt added on top of gelled gel (comp. ex) | 0.4 | 0.6 | 3.3 |

A reduction in syneresis was observed when a layer comprising salt according to the invention was used on the bottom of the packaging (3A), compared to the situation when no layer was present (3D), or when the same amount of salt was mixed into the gel before solidification or when the salt layer was added on top of the gel before (3B) or after (3E) solidification of the gel.

The total syneresis levels represent the amount of syneresis measured based on the initial weight of the gel without the added salt layer.

## Claims

1. A packaged food concentrate comprising a gel and a layer, wherein the layer comprises more than 26.5 wt% of total salt (based on the weight of the water content of the layer, and calculated as ((weight of salt in the layer)/(weight of salt in the layer + weight of water in the layer))*100%, and which layer is in contact with the gel and wherein the layer is located below the gel.

2. Packaged food concentrate according to claim 1, wherein the gel comprises:
• from 10 to 40 wt% of salt, based on the weight of the water content of the gel and calculated as ((weight of salt)/(weight of salt + weight of total water content of the gel))*100%
• from 30 to 80 wt% of water
• an effective amount of a gelling system.

3. Packaged food concentrate according to claim 1 or 2, wherein the total amount of salt contained in the food concentrate is from 15 wt% to 80 wt%, preferably of from 15 wt% to 55 wt%, based on the total water content of the cooking aid and is calculated as ((weight of salt)/(weight of salt + weight of water))*100%.

4. Packaged food concentrate according to any one of the preceding claims, wherein the layer constitutes from 2 wt% to 49 wt% of the food concentrate.

5. Packaged food concentrate according to any one of the preceding claims, wherein the layer comprises from 50 wt% to 100 wt% of total salt (based on the weight of the water content of the layer, and calculated as ((weight of salt in the layer)/(weight of salt in the layer + weight of water in layer))*100%.

6. Packaged food concentrate according to any one of the preceding claims, wherein the layer comprises less than 50 wt% of water, based on the weight of the layer.

7. Packaged food concentrate according to anyone of the preceding claims, wherein the gel comprises a gelling system which is selected from the group consisting of gelatinised modified starch, gelatine combined with gelatinised starch, xanthan gum combined with a glucomannan, xanthan gum combined with a galactomannan, xanthan gum combined with carrageenan, carrageenan, agar-agar, and mixtures thereof.

8. Packaged food concentrate according to anyone of the preceding claims, wherein the gel comprises a gelling system comprising xanthan gum and locust bean gum.

9. Packaged food concentrate according to any one of the preceding claims, wherein the layer further comprises plant material in an amount of from 0.5 wt% to 40 wt%, (wet weight based on the weight of the layer, and calculated as (wet weight of plant material / total weight of the layer) *100%, wherein wet weight is defined as the weight in a swollen state in NaCl-saturated water solution.

10. Packaged food concentrate according to any one of the preceding claims, further comprising a savoury taste enhancer selected from the group consisting of monosodium glutamate (MSG), 5'-ribonucleotides, organic acid and mixtures thereof.

11. Packaged food concentrate according to any one of the preceding claims, wherein the layer has an average thickness of higher than 0.3 mm and lower than 20 mm.

12. Packaged food concentrate according to any one of the preceding claims, wherein the layer has a volume of from 2% to 49% of the volume of the food concentrate.

13. A process to prepare a packaged food concentrate according to any one of the preceding claims, the process comprising the steps of:
i. Providing a packaging,
ii. Adding salt to the packaging,
iii. Adding to the packaging a gel or a non-solidified ingredient mixture for a gel,
iv. If required, solidifying said ingredient mixture,
to result in a packaged food concentrate comprising a gel and a layer.

14. Process according to claim 13, wherein solidifying comprises cooling to a temperature of the food concentrate of from 5°C to 30°C.

15. Use of the packaged food concentrate according to any one of the claims 1 to 12 for preparing a bouillon, a soup, a sauce or a seasoned dish.

## Patentansprüche

1. Verpacktes Lebensmittelkonzentrat, umfassend ein Gel und eine Schicht, wobei die Schicht mehr als 26,5 Gew.-% Gesamtsalz umfasst (bezogen auf das Gewicht des Wassergehalts der Schicht und berechnet als ((Gewicht des Salzes in der Schicht) / (Gewicht des Salzes in der Schicht + Gewicht des Wassers in der Schicht))*100%, und die Schicht mit dem Gel in Kontakt steht und wobei die Schicht unter dem Gel angeordnet ist.

2. Verpacktes Lebensmittelkonzentrat nach Anspruch 1, wobei das Gel umfasst:
• von 10 bis 40 Gew.-% Salz, bezogen auf das Gewicht des Wassergehalts des Gels und berechnet als ((Gewicht des Salzes)/(Gewicht des Salzes + Gewicht des gesamten Wassergehalts des Gels))*100%
• von 30 bis 80 Gew.-% Wasser
• eine effektive Menge an einem Geliersystem.

3. Verpacktes Lebensmittelkonzentrat nach Anspruch 1 oder 2, wobei die Gesamtmenge des in dem Lebensmittelkonzentrat enthaltenen Salzes von 15 Gew.-% bis 80 Gew.-%, vorzugsweise von 15 Gew.-% bis 55 Gew.-%, bezogen auf den gesamten Wassergehalt des Kochhilfsmittels, beträgt und als ((Gewicht des Salzes)/(Gewicht des Salzes + Gewicht des Wassers))*100% berechnet ist.

4. Verpacktes Lebensmittelkonzentrat nach irgendeinem der vorhergehenden Ansprüche, wobei die Schicht von 2 Gew.-% bis 49 Gew.-% des Lebensmittelkonzentrats ausmacht.

5. Verpacktes Lebensmittelkonzentrat nach irgendeinem der vorhergehenden Ansprüche, wobei die Schicht von 50 Gew.-% bis 100 Gew.-% Gesamtsalz (bezogen auf das Gewicht des Wassergehaltes der Schicht und berechnet als ((Gewicht des Salzes in der Schicht)/(Gewicht des Salzes in der Schicht + Gewicht des Wassers in der Schicht))*100% umfasst.

6. Verpacktes Lebensmittelkonzentrat nach irgendeinem der vorhergehenden Ansprüche, wobei die Schicht weniger als 50 Gew.-% Wasser, bezogen auf das Gewicht der Schicht, umfasst.

7. Verpacktes Lebensmittelkonzentrat nach irgendeinem der vorhergehenden Ansprüche, wobei das Gel ein Geliersystem umfasst, das aus der aus gelierter modifizierter Stärke, mit gelatinierter Stärke kombinierter Gelatine, mit einem Glucomannan kombiniertem Xanthan, mit einem Galactomannan kombiniertem Xanthangummi, mit Carrageen kombiniertem Xanthangummi, Carrageen, Agar-Agar und Mischungen davon bestehenden Gruppe ausgewählt ist.

8. Verpacktes Lebensmittelkonzentrat nach irgendeinem der vorhergehenden Ansprüche, wobei das Gel ein Geliersystem umfasst, das Xanthangummi und Johannisbrotgummi umfasst.

9. Verpacktes Lebensmittelkonzentrat nach irgendeinem der vorhergehenden Ansprüche, wobei die Schicht des Weiteren Pflanzenmaterial in einer Menge von 0,5 Gew.-% bis 40 Gew.-% (Nassgewicht bezogen auf das Gewicht der Schicht und berechnet als (Nassgewicht des pflanzlichen Materials / Gesamtgewicht der Schicht)*100% umfasst, wobei das Nassgewicht als Gewicht in gequollenem Zustand in einer NaCl-gesättigten Wasserlösung definiert ist.

10. Verpacktes Lebensmittelkonzentrat nach irgendeinem der vorhergehenden Ansprüche, des Weiteren umfassend einen Geschmacksverstärker, der aus der aus Mononatriumglutamat (MSG), 5'-Ribonucleotiden, organischer Säure und Mischungen davon bestehenden Gruppe ausgewählt ist.

11. Verpacktes Lebensmittelkonzentrat nach irgendeinem der vorhergehenden Ansprüche, wobei die Schicht eine Durchschnittsdicke von höher als 0,3 mm und niedriger als 20 mm aufweist.

12. Verpacktes Lebensmittelkonzentrat nach irgendeinem der vorhergehenden Ansprüche, wobei die Schicht ein Volumen von 2% bis 49% des Volumens des Lebensmittelkonzentrats aufweist.

13. Verfahren zur Herstellung eines verpackten Lebensmittelkonzentrats nach irgendeinem der vorhergehenden Ansprüche, wobei das Verfahren die Schritte umfasst:
i. Bereitstellen einer Verpackung,
ii. Zugeben von Salz zu der Verpackung,
iii. Zugeben eines Gels oder einer nicht verfestigten Bestandteilsmischung für ein Gel zu der Verpackung,
iv. wenn erforderlich, Verfestigen der Bestandteilsmischung,
um ein ein Gel und eine Schicht umfassendes verpacktes Lebensmittelkonzentrat zu liefern.

14. Verfahren nach Anspruch 13, wobei das Verfestigen Kühlen des Lebensmittelkonzentrats auf eine Temperatur von 5°C bis 30°C umfasst.

15. Verwendung des verpackten Lebensmittelkonzentrats nach irgendeinem der Ansprüche 1 bis 12 zur Zubereitung einer Bouillon, einer Suppe, einer Soße oder eines gewürzten Gerichts.

## Revendications

1. Concentré alimentaire emballé comprenant un gel et une couche, dans lequel la couche comprend plus de 26,5 % en masse de sel total (rapporté à la masse du contenu d'eau de la couche, et calculé comme ((masse de sel dans la couche)/(masse de sel dans la couche + masse d'eau dans la couche))*100 %, et laquelle couche est en contact avec le gel et dans lequel la couche est disposée sous le gel.

2. Concentré alimentaire emballé selon la revendication 1, dans lequel le gel comprend :
. de 10 à 40 % en masse de sel, rapporté à la masse du contenu d'eau du gel et calculé comme ((masse de sel)/(masse de sel + masse de contenu total d'eau du gel))*100 %
. de 30 à 80 % en masse d'eau
. une quantité efficace d'un système gélifiant.

3. Concentré alimentaire emballé selon la revendication 1 ou 2, dans lequel la quantité totale de sel contenu dans le concentré alimentaire est de 15 % en masse à 80 % en masse, de préférence de 15 % en masse à 55 % en masse, rapporté au contenu total d'eau de l'auxiliaire de cuisson et calculé comme ((masse de sel)/(masse de sel + masse d'eau))*100 %.

4. Concentré alimentaire emballé selon l'une quelconque des revendications précédentes, dans lequel la couche constitue de 2 % en masse à 49 % en masse du concentré alimentaire.

5. Concentré alimentaire emballé selon l'une quelconque des revendications précédentes, dans lequel la couche comprend de 50 % en masse à 100 % en masse de sel total (rapporté à la masse du contenu d'eau de la couche, et calculé comme ((masse de sel dans la couche)/(masse de sel dans la couche + masse d'eau dans la couche))*100 %.

6. Concentré alimentaire emballé selon l'une quelconque des revendications précédentes, dans lequel la couche comprend moins de 50 % en masse d'eau, rapporté à la masse de la couche.

7. Concentré alimentaire emballé selon l'une quelconque des revendications précédentes, dans lequel le gel comprend un système gélifiant qui est choisi dans le groupe constitué d'amidon modifié gélatinisé, de gélatine combinée avec de l'amidon gélatinisé, de gomme xanthane combinée avec un glucomannane, de gomme xanthane combinée avec un galactomannane, de gomme xanthane combinée avec du carraghénane, de carraghénane, d'agar-agar, et de mélanges de ceux-ci.

8. Concentré alimentaire emballé selon l'une quelconque des revendications précédentes, dans lequel le gel comprend un système gélifiant comprenant de la gomme xanthane et de la gomme de caroube.

9. Concentré alimentaire emballé selon l'une quelconque des revendications précédentes, dans lequel la couche comprend de plus un matériau de plante dans une quantité de 0,5 % en masse à 40 % en masse, (masse humide rapportée à la masse de la couche, et calculée comme (masse humide de matériau de plante/masse totale de la couche)*100 %, dans lequel la masse humide est définie comme la masse dans un état gonflé dans une solution d'eau saturée en NaCl.

10. Concentré alimentaire emballé selon l'une quelconque des revendications précédentes, comprenant de plus un promoteur de goût savoureux choisi dans le groupe constitué de glutamate de monosodium (MSG), de 5'-ribonucléotides, d'acide organique et de mélanges de ceux-ci.

11. Concentré alimentaire emballé selon l'une quelconque des revendications précédentes, dans lequel la couche présente une épaisseur moyenne supérieure à 0,3 mm et inférieure à 20 mm.

12. Concentré alimentaire emballé selon l'une quelconque des revendications précédentes, dans lequel la couche présente un volume de 2 % à 49 % du volume du concentré alimentaire.

13. Procédé de préparation d'un concentré alimentaire emballé selon l'une quelconque des revendications précédentes, le procédé comprenant les étapes :
i. de fourniture d'un emballage,
ii. d'addition de sel à l'emballage,
iii. d'addition à l'emballage d'un gel ou d'un mélange d'ingrédient non-solidifié pour un gel,
iv. si nécessaire, de solidification dudit mélange d'ingrédient,
pour résulter en un concentré alimentaire emballé comprenant un gel et une couche.

14. Procédé selon la revendication 13, dans lequel la solidification comprend le refroidissement à une température du concentré alimentaire de 5°C à 30°C.

15. Utilisation du concentré alimentaire emballé selon l'une quelconque des revendications 1 à 12 pour la préparation d'un bouillon, d'une soupe, d'une sauce ou d'un plat assaisonné.
